# DEMANDE DE BREVET EUROPEEN

(11) **EP 1 134 936 A1**
(43) Date de publication de la demande: **19.09.2001**
(21) Numéro de dépôt: 01400478.2
(22) Date de dépôt: 22.02.2001
(51) Int. Cl.: H04L 12/28, H04J 3/07

(54) **Procédé de transmission de signaux entre deux réseaux locaux.**

(30) Priorité: 25.02.2000 FR 0002403
(71) Demandeur: SAGEM S.A., 75116 Paris (FR)
(72) Inventeur: Cauderlier, André, 77127 Lieusaint (FR)
(74) Mandataire: Fruchard, Guy

(57) **Abrégé**

Le procédé de transmission comporte les étapes de diviser un signal à haut débit (5) issu du premier réseau local (1) selon des voies (7) ayant un débit correspondant aux conduits numériques, assurer un multiplexage (8) des voies (7) en calculant une justification positive sur une des voies et en appliquant la même justification sur les autres voies, assurer une transmission du signal multiplexé obtenu, générer un signal à haut débit correspondant au signal multiplexé reçu et fournir celui-ci au second réseau local.

## Description

La présente invention concerne un procédé de transmission de signaux d'un conduit numérique à haut débit par des conduits numériques à plus faible débit.

On connaît des réseaux locaux, communément appelés LAN, fonctionnant à haut débit, par exemple à un débit de 10 Mb/s. Lorsque deux réseaux locaux distants l'un de l'autre doivent être reliés, pour assurer une transmission des données. Le procédé le plus couramment utilisé pour assurer cette transmission consiste à mettre en oeuvre des protocoles de communication en mode paquets. Dans ce type de protocole, les informations devant être transmises sont divisées selon des paquets qui sont acheminés au fur et à mesure des disponibilités des conduits numériques souvent établis par un faisceau hertzien. Il est donc nécessaire d'assurer une gestion des paquets afin de permettre une reconstitution des informations après réception des paquets par le réseau local destinataire. Une telle gestion implique l'implantation de logiciels importants dont le fonctionnement constitue une contrainte importante dans le fonctionnement général des réseaux locaux.

Par ailleurs, la transmission est souvent assurée par des conduits numériques alimentés en signaux plésiochrones, c'est-à-dire des signaux ayant sensiblement le même débit, les décalages de débit pouvant être corrigés par la réalisation d'une justification positive consistant à porter le signal à son débit maximal en ajoutant des bits de justification et des bits d'indication de justification pour assurer une compensation entre le débit réel et le débit maximal. De tels conduits pourraient être utilisés pour transmettre des informations d'un réseau local à un autre mais leur débit est très inférieur à celui du réseau local de sorte qu'il est nécessaire d'utiliser plusieurs conduits simultanément pour atteindre le débit utile du réseau local. Le débit global à transmettre doit donc être réparti sur plusieurs voies correspondant au débit des conduits numériques. Les différentes voies sont ensuite multiplexées pour être transmises. Si les voies sont multiplexées de façon classique les bits de justification de chaque voie ainsi que les bits d'indication de justification sont positionnés en fonction des états des compteurs d'écriture et de lecture de la mémoire tampon de chaque voie. Il n'y a donc pas de corrélation entre les voies et il n'est pas possible de garantir l'intégrité des informations transmises.

Un but de la présente invention est de proposer un procédé permettant une transmission simple et rapide d'informations à haut débit en utilisant des conduits numériques à plus faible débit tout en garantissant l'intégrité des informations transmises.

En vue de la réalisation de ce but, on prévoit selon l'invention un procédé de transmission de signaux entre un premier réseau local et un second réseau local fonctionnant à haut débit par des conduits numériques à plus faible débit, ce procédé comportant les étapes de diviser un signal à haut débit issu du premier réseau local selon des voies ayant un débit correspondant aux conduits numériques à faible débit, assurer un multiplexage des voies en calculant une justification positive sur une des voies et en appliquant la même justification sur les autres voies, assurer une transmission du signal multiplexé obtenu, générer un signal à haut débit correspondant au signal multiplexé reçu et fournir celui-ci au second réseau local.

Ainsi, la division du signal à haut débit permet d'obtenir des voies synchrones et rigoureusement à la même fréquence, de sorte que le calcul de la justification sur une seule des voies et l'application de la même justification aux autres voies n'affecte en aucune façon l'intégrité des informations transmises sur les différentes voies. En outre, la synchronisation des différentes voies à faible débit permet de reconstituer un signal à haut débit par simple lecture en supprimant au fur et à mesure les bits de justification positive et le mot de verrouillage permettant de détecter le début d'une trame.

Par ailleurs, compte tenu du faible taux d'utilisation réel des réseaux locaux (de l'ordre de 30 à 40 % afin d'éviter les risques de collision qui perturberaient le fonctionnement du réseau local), il est inutile d'assurer une transmission à un débit total équivalent au débit du réseau local.

Selon une version avantageuse de l'invention, le procédé comporte en outre l'étape de sélectionner des informations à transmettre à partir du signal à haut débit du premier réseau local et constituer un signal à haut débit intermédiaire avant de diviser celui-ci selon les voies ayant un débit correspondant aux conduits numériques à faible débit. Ainsi, les informations peuvent être transmises en utilisant un nombre réduit de conduits numériques.

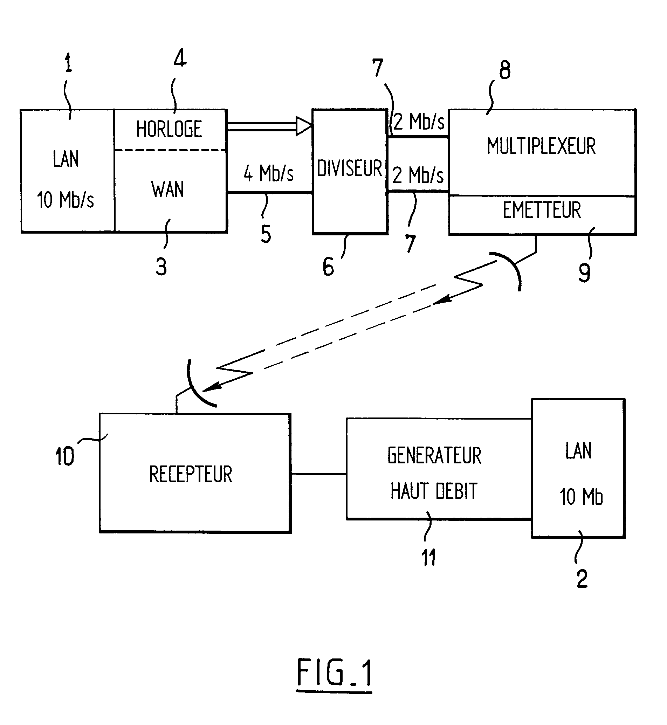

D'autres caractéristiques et avantages de l'invention apparaîtront à la lecture de la description qui suit d'un mode de mise en oeuvre particulier non limitatif de l'invention, en relation avec la figure unique ci-jointe qui illustre le procédé selon l'invention selon un schéma par blocs.

En référence à la figure, le procédé selon l'invention est destiné à assurer une transmission d'informations entre un premier réseau local 1 et un second réseau local 2 fonctionnant à haut débit, 10 Mb/s dans l'exemple illustré.

Dans le mode de mise en oeuvre illustré, le premier réseau local 1 est associé à un réseau à large bande 3, couramment dénommé WAN, comprenant une horloge 4. Le réseau à large bande 3 assure une extraction des informations à transmettre au second réseau local. Compte tenu du taux d'occupation effectif du premier réseau local 1 comme mentionné ci-dessus, le débit de sortie du réseau à large bande 3 est sensiblement plus faible que le débit nominal du premier réseau local. Dans l'exemple illustré, le débit de sortie du réseau à large bande 3 est de 4 Mb/s le conduit numérique 5 ainsi réalisé est relié à un organe diviseur 6 fonctionnant sous le contrôle de l'horloge 4 du réseau à large bande.

Dans le mode de mise en oeuvre illustré, il est prévu d'utiliser des conduits numériques 7 ayant des débits nominaux de 2 Mb/s. L'organe diviseur 6 est donc prévu pour effectuer une division par deux et réalise les deux voies 7 correspondant aux conduits à faible débit qui sont ainsi synchrones et sont rigoureusement à la même fréquence. Chacune des voies 7 reçoit cycliquement par répartition temporelle des bits du conduit numérique à haut débit intermédiaire 5. Les voies 7 sont reliées à un organe de multiplexage 8 associé à un émetteur 9. L'organe de multiplexabe 8 effectue de façon connue en soi une justification positive sur l'une des voies et, selon l'invention, la même justification est appliquée sur la seconde voie 7. L'organe de multiplexage 8 ajoute en outre de façon également connue en soi un mot de verrouillage permettant de déterminer le début de la trame. Le signal multiplexé ainsi constitué est transmis de façon hertzienne par l'émetteur 9 vers un récepteur 10 associé à un générateur haut débit 11. On notera à ce propos que compte tenu de l'entrelacement des voies 7 réalisées lors du multiplexage et de l'identité des justifications sur les deux voies 7, il n'est pas nécessaire d'assurer un démultiplexage du signal reçu avant de générer un signal de haut débit. Il suffit en effet que le générateur haut débit 11 soit constitué par une horloge trouée, c'est-à-dire une horloge dont des fronts d'horloge sont occultés aux instants appropriés afin d'effectuer la suppression des bits de justification, des bits d'indication de justification et des bits du mot de verrouillage de trame. Le signal haut débit ainsi obtenu est transmis au réseau local 2.

Bien entendu, l'invention n'est pas limitée au mode de mise en oeuvre illustré et on peut y apporter des variantes de réalisation sans sortir du cadre de l'invention.

En particulier, bien que l'invention ait été décrite en relation avec un réseau local ayant un débit de 10 Mb/s, un conduit numérique à haut débit intermédiaire de 4 Mb/s et des conduits numériques à faible débit de à 2 Mb/s, l'invention n'est pas limitée à ces valeurs et le nombre de conduits numériques utilisés pourra être adapté de façon statique ou dynamique au débit effectif constaté dans le réseau à large bande en fonction de la bande passante nécessaire pour la transmission des informations. Dans le cas d'un réseau local 1 ayant un débit correspondant à un faible multiple du débit des conduits numériques on pourra également envisager une division directe du débit du réseau local, c'est-à-dire sans réalisation d'un signal à haut débit intermédiaire.

Bien que dans l'exemple décrit la transmission entre les réseaux locaux soit assurée par voie hertzienne, on peut également prévoir une transmission filaire.

## Revendications

1. Procédé de transmission de signaux entre un premier réseau local (1) et un second réseau local (2) fonctionnant à haut débit par des conduits numériques (7) à plus faible débit, **caractérisé en ce qu'**il comporte les étapes de diviser un signal à haut débit (5) issu du premier réseau local (1) selon des voies (7) ayant un débit correspondant aux conduits numériques à faible débit, assurer un multiplexage (8) des voies (7) en calculant une justification positive sur une des voies et en appliquant la même justification sur les autres voies, assurer une transmission du signal multiplexé obtenu, générer un signal à haut débit correspondant au signal multiplexé reçu et fournir celui-ci au second réseau local (2).

2. Procédé selon la revendication 1, **caractérisé en ce qu'**il comporte en outre l'étape de sélectionner des informations à transmettre à partir du signal à haut débit du premier réseau local (1) et constituer un signal à haut débit intermédiaire (5) avant de diviser celui-ci selon les voies (7) ayant un débit correspondant aux conduits numériques à faible débit.
